# EUROPÄISCHE PATENTSCHRIFT

(11) **EP 0 816 426 B1**
(45) Veröffentlichungstag und Bekanntmachung des Hinweises auf die Patenterteilung: **30.08.2000**
(21) Anmeldenummer: 97110107.6
(22) Anmeldetag: 20.06.1997
(51) Int. Cl.: C08L 23/02, C08L 95/00, C08J 3/22

(54) **Verfahren zur Herstellung gefärbter thermoplastischer Formmassen**
Process for the manufacture of coloured moulding compositions
Procédé pour la préparation de compositions de moulage colorées

(30) Priorität: 28.06.1996 DE 19625983
(43) Veröffentlichungstag der Anmeldung: 07.01.1998
(73) Patentinhaber: BASF AKTIENGESELLSCHAFT, 67056 Ludwigshafen (DE)
(72) Erfinder: Blümel, Thomas Dr., 67167 Erpolzheim (DE); Kurbatfinski, Jakob, 50389 Wesseling (DE); Brambach, Toni, 53721 Siegburg (DE); Riegler, Robert, 67459 Böhl-Iggelheim (DE)

(56) Entgegenhaltungen:
- EP-A- 0 304 767
- DE-A- 2 363 733
- DE-A- 3 635 283
- DATABASE WPI Section Ch, Week 9413 Derwent Publications Ltd., London, GB; Class A93, AN 94-106988 XP002043145 & JP 06 057 148 A (SUMIKA COLOR KK) , 1.März 1994

## Beschreibung

Gegenstand der vorliegenden Erfindung ist ein
Verfahren zur Herstellung gefärbter thermoplastischer Formmassen enthaltend
a) mindestens ein thermoplastisches Polymer,
b) Bitumen,
c) ein oder mehrere Pigmente und
d) gewünschtenfalls weitere Zusätze.

Weiterhin sind Gegenstand der vorliegenden Erfindung gefärbte thermoplastische Formmassen erhältlich nach diesem Verfahren sowie die Verwendung dieser Formmassen zur Herstellung von Dichtungsbahnen.

Bitumenhaltige thermoplastische Formmassen finden breite Verwendung z.B. als Abdichtungsbahnen für Flachdächer oder Wandabdichtungen. Durch den Bitumenanteil sind solche Formmassen in der Regel schwarz. Versuche, diese Formmassen durch Mischung mit Pigmenten einzufärben, führten bisher zu unbefriedigenden Farbeindrücken mit wenig brillantem Erscheinungsbild.

Aufgabe der vorliegenden Erfindung war es daher, ein Verfahren zur Herstellung gefärbter bitumenhaltiger thermoplastischer Formmassen zu finden, nach welchem Formmassen mit brillanterem Farbeindruck erhältlich sind.

Demgemäß wurde ein Verfahren zur Herstellung gefärbter thermoplastischer Formmassen enthaltend
a) mindestens ein thermoplastisches Polymer,
b) Bitumen,
c) ein oder mehrere Pigmente und
d) gewünschtenfalls weitere Zusätze.
gefunden, welches dadurch gekennzeichnet ist, daß man zunächst eine Mischung enthaltend das thermoplastische Polymer und die Pigmente herstellt und anschließend diese Mischung mit dem Bitumen vermischt.

Die erfindungsgemäß herstellbaren Formmassen enthalten zwischen 20 und 95 Gew.-% eines thermoplastischen Polymers, vorzugsweise 40 bis 90 Gew.-%., besonders bevorzugt 50 bis 70 Gew.-%, bezogen auf die Gesamtmasse der Formmasse.

Der Bitumenanteil der Formmassen beträgt 5 bis 70 Gew.-%, vorzugsweise 9 bis 59 Gew.-%, besonders bevorzugt 24 bis 35 Gew.-%, bezogen auf die Gesamtmasse der Formmasse.

Der Pigmentanteil der Formmassen beträgt 1 bis 25 Gew.-%, bevorzugt 10 bis 20 Gew.-%., bezogen auf die Gesamtmasse der Formmasse.

Als thermoplastische Polymere können verschieden Polymere eingesetzt werden wie Polymerisate und Copolymerisate des Ethylens, Propylens, But-1-ens, Isobutylens und Vinylchlorids. Vorzugsweise werden Ethylencopolymerisate eingesetzt. Die Copolymerisate haben üblicherweise einen Ethylenanteil von 80 bis 97 Gew.-%, besonders bevorzugt von 80 bis 90 Gew.-%. Als Comonomere kommen verschiedene olefinisch ungesättigte Monomere, z.B. Alk-1-ene wie Buten, Penten, Hexen und Octen, oder Acrylsäure und Methacrylsäure und deren Derivate, beispielsweise Ester wie Ethylacrylat, Propylacrylat, n-Butylacrylat oder Octylacrylat in Betracht. Bevorzugt sind Copolymere aus Ethylen und n-Butylacrylat.

Als Bitumen können alle handelsüblichen Norm- Bitumen nach DIN 1995 eingesetzt werden, z.B. Mexphalt® B 80 von Fa. Shell.

Als Pigmente können verschiedene Weiß- oder Farbpigmente eingesetzt werden. Vorteilhaft ist der Einsatz eines anorganischen Weißpigments. Durch das Weißpigment wird das thermoplastische Polymer optisch undurchlässig und zugleich aufgehellt. Als Weißpigment kommt besonders Titandioxid in Betracht.

Die ausschließliche Verwendung eines Weißpigments führt zu einer grauen thermoplastischen bitumenhaltigen Formmasse. Vorteilhaft ist daher der Einsatz eines farbigen Pigments, besonders in Kombination mit einem Weißpigment. In diesem Fall beträgt der Anteil des Farbpigments im allgemeinen 1 bis 15 Gew.-%, vorzugsweise 2 bis 12 Gew.-%, besonders bevorzugt 3 bis 10 Gew.-% bezogen auf die Gesamtmasse der thermoplastischen Formmasse.

Als Farbpigmente kommen alle üblichen anorganischen und organischen Farbpigmente in Betracht. Als anorganische Pigmente sind besonders Chromoxide zu nennen.

Geeignete organische Pigmente sind beispielsweise solche aus der Klasse der Monoazopigmente (z.B. Produkte, die sich von Acetessigarylidderivaten oder von β-Naphtholderivaten ableiten), Monoazofarbstoffe und deren Metallsalze, wie β-Oxynaphthoesäurefarbstoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phtahalocyaninpigmente oder basische Farbstoffe wie Triarylmethanfarbstoffe und deren Salze.

Vorteilhaft ist weiterhin der Einsatz handelsüblicher Pigmentpräparationen, wie sie zur Kunststoffeinfärbung verwendet werden. Besonders rote und grüne Pigmentpräparationen sind zur Einfärbung geeignet, beispielsweise die Pigmentzubereitungen Euthylen® (Hersteller BASF, Ludwigshafen).

Die erfindungsgemäß herstellbare Formmasse kann auch noch weitere Zusätze enthalten. In Betracht kommen vor allem Zusätze, wie sie in bituminösen Polymer-Dichtungsmassen, insbesondere in Dichtungsbahnen üblich sind. Solche Zusätze sind z.B. Stabilisatoren gegen Licht- und Witterungseinflüsse wie Derivate des 2,4-Dihydroxybenzophenons, Derivate des 2-Cyan-3,3-diphenylacrylates, Derivate des 2,2', 4,4'-Tetrahydroxybenzophenons, Derivate des Orthohydroxyphenylbenztrialzols, Salicylsäureester, Orthohydroxyphenyl-S-triazine oder sterisch gehinderte Amine.

Das erfindungsgemäße Herstellverfahren wird so durchgeführt, daß zunächst eine Mischung enthaltend das thermoplastische Polymer und die Pigmente hergestellt wird. Dies kann durch verschiedene Mischungsverfahren geschehen, vorteilhaft ist die Mischung in einem Kneter oder Extruder. Um eine ausreichende Mischung zu erreichen muß im allgemeinen bei erhöhter Temperatur gemischt werden, z.B. bei 50 bis 250°C, vorzugsweise bei 100 bis 220°C, besonders bevorzugt bei 150 bis 190°C. Es ist weiterhin vorteilhaft, bereits bei diesem Mischungsprozeß gewünschtenfalls weitere Zusätze d) zuzugeben.

In einem zweiten Schritt wird anschließend das Bitumen zugegeben. Das Bitumen kann, möglichst in kleineren Portionen, direkt in das Mischgefäß, wie z.B. einen Kneter, gegeben werden. Als besonders vorteilhaft hat sich jedoch eine feinstrahlige Zugabe in den Austrag eines Extruders erwiesen. Auf diese Weise kann das Bitumen kontinuierlich zugegeben werden, und es wird eine besonders feinteilige und gleichmäßige Verteilung des Bitumens in der Polymermasse erreicht.

Die nach dem erfindungsgemäßen Herstellverfahren erhältliche gefärbte thermoplastische Formmasse weist gegenüber herkömmlich gefärbten bitumenhaltigen Formmassen eine deutlich brillantere Färbung auf.

Die erfindungsgemäßen gefärbten thermoplastischen Formmassen können als Dichtungsmassen in verschiedenen Anwendungsbereichen verwendet werden. Besonders vorteilhaft ist die Verwendung der Formmassen zur Herstellung von Dichtungsbahnen, insbesondere für Dach- und Gebäudeabdichtungen. Die Verarbeitungsweise der Formmassen kann dabei der üblichen Verarbeitungsweise entsprechen, nach denen beispielsweise ECB-Bahnen nach DIN 16729 hergestellt werden.

### Beispiele

### Erfindungsgemäßes Beispiel

In einem Brabenderkneter wurden 60 Gew.-Teile eines n-Butyl-Ethylen-Copolymeren mit einem Ethylenanteil von 18 Gew.-% (Lucalen® A 2710 H, BASF AG, Ludwigshafen), 10 Gew.-Teile Titandioxid und 5 Gew.-Teile der grünen Farbpigmentzubereitung Euthylen®-Grün (Hersteller BASF AG, Ludwigshafen) 10 min bei 170°C geknetet. Anschließend wurden 25 Gew.-Teile Bitumen (Mexphalt® B80, Fa. Shell AG) portionsweise hinzugefügt und weitere 5 min geknetet.

### Nichterfindungsgemäßes Vergleichsbeispiel:

In einem Brabenderkneter wurden 60 Gew.-Teile eines n-Butyl-Ethylen-Copolymeren mit einem Ethylenanteil von 18 Gew.-% (Lucalen® A 2710 H, BASF AG, Ludwigshafen), 10 Gew.-Teile Titandioxid, 5 Gew.-Teile der grünen Farbpigmentzubereitung Euthylen®-Grün (Hersteller BASF AG, Ludwigshafen) und 25 Gew.-% Teile Bitumen (Mexphalt® B80, Fa. Shell AG) zeitgleich 15 min bei 170°C geknetet.

Der Versuch zeigt, daß das erfindungsgemäße Beispiel eine Formmasse mit einem grünen Farbton nach RAL 6013 (schilfgrün) liefert, wogegen nach dem Vergleichsbeispiel eine Formmasse mit diffusem, schmutzig dunkelgrünen Farbton, der keinem RAL-Farbton entspricht, erhalten wurde.

## Patentansprüche

1. Verfahren zur Herstellung gefärbter thermoplastischer Formmassen enthaltend, bezogen auf die Gesamtmasse der Formmasse
a) 20 bis 95 Gew.-% mindestens eines thermoplastischen Polymers,
b) 5 bis 70 Gew.-% Bitumen,
c) 1 bis 25 Gew.-% eines oder mehrerer Pigmente und
d) gewünschtenfalls weitere Zusätze,
dadurch gekennzeichnet, daß man zunächst eine Mischung enthaltend das thermoplastische Polymer und die Pigmente herstellt und anschließend diese Mischung mit dem Bitumen vermischt.

2. Verfahren nach Anspruch 1, dadurch gekennzeichnet, daß die thermoplastische Formmasse 40 bis 90 Gew.-% des thermoplastischen Polymers a) enthält.

3. Verfahren nach Anspruch 1 und 2, dadurch gekennzeichnet, daß die thermoplastische Formmasse 9 bis 59 Gew.-% Bitumen enthält.

4. Verfahren nach den Ansprüchen 1 bis 3 dadurch gekennzeichnet, daß die thermoplastische Formmasse 10 bis 20 Gew.-% eines oder mehrerer Pigmente enthält.

5. Verfahren nach den Ansprüchen 1 bis 4 dadurch gekennzeichnet, daß als thermoplastisches Polymer ein Ethylencopolymerisat eingesetzt wird.

6. Verfahren nach den Ansprüchen 1 bis 5, dadurch gekennzeichnet, daß als Pigmente zumindest ein anorganisches Weißpigment eingesetzt wird.

7. Thermoplastische Formmassen erhältlich nach einem Verfahren gemäß den Ansprüchen 1 bis 6.

8. Verwendung der gefärbten thermoplastischen Formmassen gemäß Anspruch 7 zur Herstellung von Dichtungsbahnen.

## Revendications

1. Procédé de préparation de masses de moulage thermoplastiques colorées, contenant, par rapport à la masse globale de la masse de moulage,
a) 20 à 95% en poids d'au moins un polymère thermoplastique,
b) 5 à 70% en poids de bitume,
c) 1 à 25% en poids d'un ou de plusieurs pigments, et
d) éventuellement d'autres additifs,
caractérisé en ce qu'on prépare tout d'abord un mélange contenant le polymère thermoplastique et les pigments et en ce qu'ensuite on mélange le bitume à ce mélange.

2. Procédé suivant la revendication 1, caractérisé en ce que la masse de moulage thermoplastique contient 40 à 90% en poids du polymère thermoplastique a).

3. Procédé suivant l'une des revendications 1 et 2, caractérisé en ce que la masse de moulage thermoplastique contient 9 à 59% en poids de bitume.

4. Procédé suivant l'une des revendications 1 à 3, caractérisé en ce que la masse de moulage thermoplastique contient 10 à 20% en poids d'un ou de plusieurs pigments.

5. Procédé suivant l'une des revendications 1 à 4, caractérisé en ce que, comme polymère thermoplastique, on met en oeuvre un copolymère d'éthylène.

6. Procédé suivant l'une des revendications 1 à 5, caractérisé en ce que, comme pigment, on met en oeuvre au moins un pigment blanc inorganique.

7. Masses de moulage thermoplastiques que l'on peut obtenir suivant un procédé selon l'une des revendications 1 à 6.

8. Utilisation des masses de moulage thermoplastiques colorées suivant la revendication 7, pour la fabrication de bandes d'étanchéité.

## Claims

1. A process for preparing colored thermoplastic molding materials comprising, based on the total mass of the molding material,
a) from 20 to 95 % by weight of at least one thermoplastic polymer,
b) from 5 to 70 % by weight of bitumen,
c) from 1 to 25 % by weight of one or more pigments, and
d) if desired, further ingredients,
which comprises first preparing a mixture comprising the thermoplastic polymer and the pigments and then mixing this mixture with the bitumen.

2. A process as claimed in claim 1, wherein the thermoplastic molding material comprises from 40 to 90 % by weight of thermoplastic polymer a).

3. A process as claimed in claim 1 or 2, wherein the thermoplastic molding material comprises from 9 to 59 % by weight of bitumen.

4. A process as claimed in any of claims 1 to 3, wherein the thermoplastic molding material comprises from 10 to 20 % by weight of one or more pigments.

5. A process as claimed in any of claims 1 to 4, wherein the thermoplastic polymer used is an ethylene copolymer.

6. A process as claimed in any of claims 1 to 5, wherein the pigments used include at least one inorganic white pigment.

7. Thermoplastic molding materials obtainable by a process as claimed in any of claims 1 to 6.

8. The use of the colored thermoplastic molding materials of claim 7 for manufacturing sealing membranes.
